# EUROPEAN PATENT SPECIFICATION

(11) **EP 0 483 895 B1**
(45) Date of publication and mention of the grant of the patent: **09.03.1994**
(21) Application number: 91202609.3
(22) Date of filing: 07.10.1991
(51) Int. Cl.: B60J 5/04

(54) **Hinged vehicle body elements and the method for their assembly**
Fahrzeugkarrosserieteile mit Scharnieren und Montageverfahren
Partie de carrosserie de véhicule avec charnière et sa méthode de montage

(30) Priority: 09.10.1990 IT 2168390
(43) Date of publication of application: 06.05.1992
(73) Proprietor: FIAT AUTO S.p.A., 10135 Torino (IT)
(72) Inventor: Bosotti, Giovanni, I-20014 Nerviano-Milan (IT); Benedetto, Carmelo, I-20123 Milan (IT)
(74) Representative: Henke, Erwin

(56) References cited:
- EP-A- 0 304 769

## Description

This invention relates to hinged body elements in a motor vehicle body and the method for their assembly as specified in the preamble of claim 1 and 7 and as disclosed for example in the document EP-A- 0 304 769.

In particular, the invention relates to elements hinged to a vehicle body, such as hoods or doors.

A known problem arises in respecting tolerances during the fitting of hinged elements as these are mounted when vehicle assembly is already at an advanced stage.

In this respect, the position of a door or hood on the vehicle can only be adjusted to the extent of the adjustment which can be made at the hinges and locks, and in addition in the current state of the art it is also difficult to check the internal component arrangement within doors or hoods.

The object of the present invention is to overcome the drawbacks of known hinged elements, and allow their assembly to be comfortably managed within the assembly line. This object is achieved by the features specified in the characterising portion of claims 1 and 7.

This object is attained by hinged elements in a motor vehicle body comprising a frame to which a backing-frame rigid with an external cover element can be securely fixed, said backing-frame being provided with reinforcement means, characterised in that said frame is provided with a plurality of bosses constructed of removable material and with which fixing means provided on said backing-frame engage.

The frame can be of plastics or metal construction.

In one embodiment of the present invention the cover element is bonded to said backing-frame, and the fixing means provided on said backing-frame are bolts positioned between the cover element and backing-frame and fixable to the bosses, once drilled, by relative nuts.

The reinforcement means for said backing-frame are an anti-yielding crossmember positioned horizontally between the uprights of said backing-frame.

The structural and operational characteristics and advantages of the hinged body elements according to the present invention will be more apparent from the description given hereinafter by way of non-limiting example with reference to the accompanying schematic drawings in which:

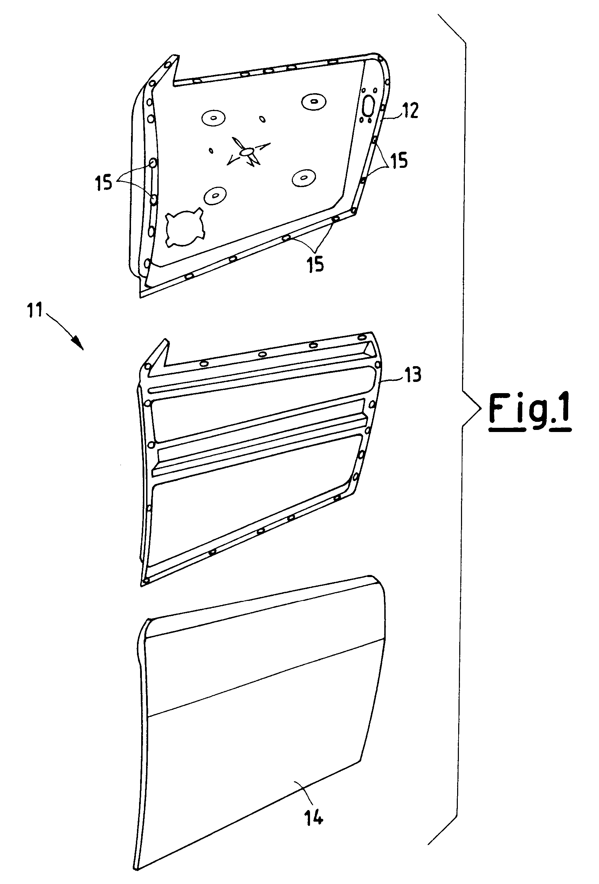

Figure 1 is an exploded perspective view of hinged elements according to the invention;

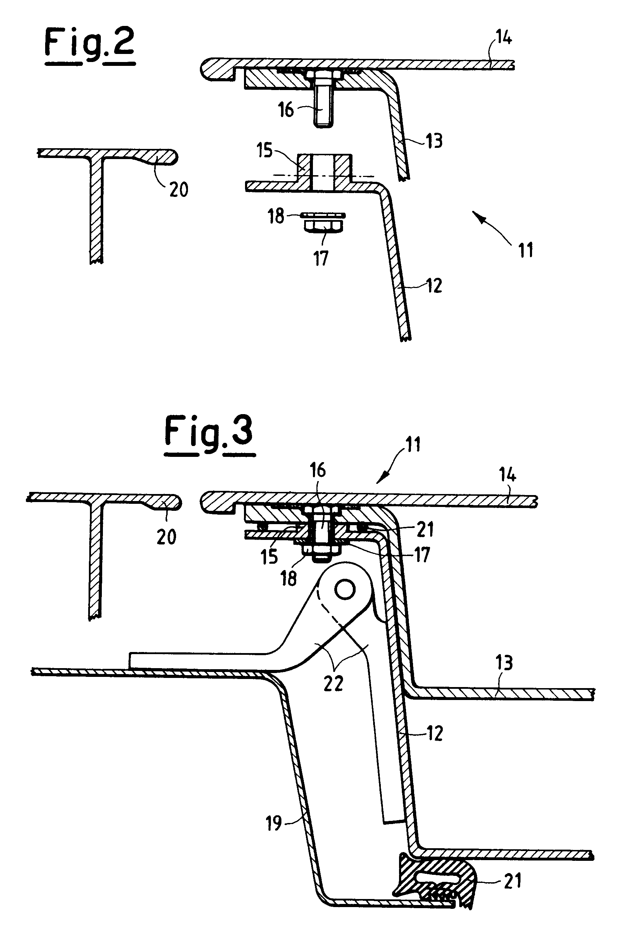

Figure 2 is a plan view of a detail of the hinged elements according to the invention before their final assembly; and
Figure 3 is a plan view of an element according to the invention mounted on a vehicle, of which some details are schematically indicated.

In the figures the reference numeral 11 indicates overall a hinged element according to the invention consisting essentially of a frame 12 to which a backing-frame 13 rigid with an external cover element 14 is securely fixed.

The hinged elements according to the invention include doors or door assemblies, hoods and generally all elements which can be hinged to a vehicle.

The frame 12 comprises a plurality of raised bosses 15 or bosses able to be drilled to receive a respective plurality of bolts 16. Nuts 17 and relative washers 18 are used to complete the fixing. During the mounting stage the bolts 16 are inserted into the backing-frame after which the external cover element 14 is fixed onto it.

The frame 12 is fixed to a vehicle body 19 by a hinge 22. Before the backing-frame and frame are finally tightened together a machine tool operates in accordance with a preset program which evaluates the relative positions and thicknesses of the elements in question, comparing them with the set tolerances and with the positions of the already assembled vehicle body elements such as the body upright 19 and fender 20, to remove portions of one or more bosses and to drill the bosses so that the backing-frame with its fitted cover element is aligned with the vehicle body elements. The holes are thus drilled through the bosses at suitable points and in suitable directions, and in the same manner the required quantities are removed from said bosses along suitable planes. The backing-frame is then fixed to the frame.

This type of assembly ensures adequate tolerances at the doors and hoods against the contacting parts of seal gaskets 21.

Advantageously, using hinged elements according to the present invention all the components located within the door can be mounted and checked from the outside before its fitting to the vehicle.

## Claims

1. Hinged elements in a motor vehicle body comprising a frame (12) to which a backing-frame (13) rigid with an external cover element (14) can be securely fixed, said backing-frame (13) being provided with reinforcement means, characterized in that said frame (12) is provided with a plurality of bosses (15) constructed of removable material and with which fixing means (16) provided on said backing-frame (13) engage.

2. Hinged elements as claimed in claim 1, characterised in that said frame (12) is of plastics construction.

3. Hinged elements as claimed in claim 1, characterised in that said frame (12) is of metal construction, with bosses (15) of easily removable soft material.

4. Hinged elements as claimed in claim 1, characterised in that said cover element (14) is bonded onto said backing-frame (13).

5. Hinged elements as claimed in claim 1, characterised in that said fixing means provided on said backing-frame are bolts (16) fixable to said bosses (15) by relative nuts (17).

6. Hinged elements as claimed in claim 1, characterised in that said reinforcement means for said backing-frame (13) are an anti-yielding crossmember positioned horizontally between uprights of said backing-frame (13).

7. Method for mounting hinged elements onto a motor vehicle body, characterised in that it comprises a first stage in which fixing means (16) are inserted into a backing-frame (13), a second stage in which an external cover element (14) is fixed to said backing-frame (13) and is also arranged to retain said fixing means (16) securely in position, a third stage in which a machine tool removes a portion of bosses (15) provided on a frame (12), and a fourth stage in which said backing-frame (13) is rigidly fixed to said frame (12) by said fixing means (16).

## Patentansprüche

1. Schwenkbare Elemente in einer Kraftfahrzeugkarosserie, die einen Rahmen (12) umfassen, an welchem ein Unterstützungsrahmen (13) starr mit einem externen Abdeckungselement (14) fest befestigt werden kann, wobei der Unterstützungsrahmen (13) mit Verstärkungsmitteln versehen ist,
dadurch **gekennzeichnet**,
daß der Rahmen (12) mit einer Vielzahl von Vorsprüngen (15) versehen ist, die aus entfernbarem Material aufgebaut sind und mit welchen Befestigungsmittel (16), die auf dem Unterstützungsrahmen (13) vorgesehen sind, in Eingriff sind.

2. Schwenkbare Elemente nach Anspruch 1,
dadurch **gekennzeichnet**,
daß der Rahmen (12) von einem Kunststoffaufbau ist.

3. Schwenkbare Elemente nach Anspruch 1,
dadurch **gekennzeichnet**,
daß der Rahmen (12) von einem Metallaufbau ist, und zwar mit Vorsprüngen (15) von auf einfache Weise entfernbarem weichem Material.

4. Schwenkbare Elemente nach Anspruch 1,
dadurch **gekennzeichnet**,
daß das Abdeckelement (14) auf den Unterstützungsrahmen (13) aufgehaftet ist.

5. Schwenkbare Elemente nach Anspruch 1,
dadurch **gekennzeichnet**,
daß die Befestigungsmittel, die auf dem Unterstützungsrahmen vorgesehen sind, Bolzen (16) sind, die an die Vorsprünge (15) durch zugehörige Muttern (17) befestigbar sind.

6. Schwenkbare Elemente nach Anspruch 1,
dadurch **gekennzeichnet**,
daß die Verstärkungsmittel für den Unterstützungsrahmen (13) ein entgegengesetzt biegsames Kreuzglied sind, das horizontal zwischen Vertikalen des Unterstützungsrahmen (13) positioniert ist.

7. Verfahren zur Anbringung schwenkbarer Elemente auf einer Kraftfahrzeugkarosserie,
dadurch **gekennzeichnet**,
daß es eine erste Stufe umfaßt, in welcher die Befestigungsmittel (16) in einen Unterstützungsrahmen (13) hinein eingeschoben werden, eine zweite Stufe, in welcher ein externes Abdeckelement (14) an dem Unterstützungsrahmen (13) befestigt wird und auch dazu angeordnet wird, um die Befestigungsmittel (16) sicher in der Position zurückzuhalten, eine dritte Stufe, in welcher ein Maschinenwerkzeug einen Teil der Vorsprünge (15) entfernt, die auf dem Rahmen (12) vorgesehen sind, und eine vierte Stufe, in welcher der Unterstützungsrahmen (13) auf starre Weise an dem Rahmen (12) durch die Befestigungsmittel (16) befestigt wird.

## Revendications

1. Eléments articulés dans une carrosserie de véhicule automobile, comprenant un cadre (12) auquel peut être fermement fixé un cadre de soutien (13) d'un seul tenant avec un élément de couvercle externe (14), ledit cadre de soutien (13) étant muni de moyens de renfort, caractérisés en ce que ledit cadre (12) est muni d'une pluralité de protubérances (15) faites d'un matériau propre à être éliminé et avec lesquelles viennent en contact des moyens de fixation (16) prévus sur ledit cadre de soutien (13).

2. Eléments articulés selon la revendication 1, caractérisés en ce que ledit cadre (12) est fait d'une matière plastique.

3. Eléments articulés selon la revendication 1, caractérisés en ce que ledit cadre (12) est fait de métal, avec des protubérances (15) en matériau tendre pouvant aisément être éliminé.

4. Eléments articulés selon la revendication 1, caractérisés en ce que ledit élément de couvercle (14) est fixé audit cadre de soutien (13).

5. Eléments articulés selon la revendication 1, caractérisés en ce que lesdits moyens de fixation prévus sur ledit cadre de soutien sont des boulons (16) qui peuvent être fixés auxdites protubérances (15) par des écrous (17) correspondants.

6. Eléments articulés selon la revendication 1, caractérisés en ce que lesdits moyens de renfort pour ledit cadre de soutien (13) sont une entretoise antidéformation placée horizontalement entre les montants dudit cadre de soutien (13).

7. Procédé pour le montage d'éléments articulés sur une carrosserie de véhicule automobile, caractérisé en ce qu'il comprend une première étape dans laquelle des moyens de fixation (16) sont introduits dans un cadre de soutien (13), une deuxième étape dans laquelle un élément de couvercle externe (14) est fixé audit cadre de soutien (13) et est également prévu de manière à maintenir fermement en position lesdits moyens de fixation (16), une troisième étape dans laquelle une machine-outil retire une partie des protubérances (15) prévues sur un cadre (12), et une quatrième étape dans laquelle ledit cadre de soutien (13) est rigidement fixé audit cadre (12) par lesdits moyens de fixation (16).
